# EUROPEAN PATENT APPLICATION

(11) **EP 0 961 526 A2**
(43) Date of publication of application: **01.12.1999**
(21) Application number: 99201550.3
(22) Date of filing: 15.05.1999
(51) Int. Cl.: H05B 37/03

(54) **Electronic control system for operating emergency lamps**

(30) Priority: 20.05.1998 IT MI981110
(71) Applicant: Beghelli S.p.A., 40050 Monteveglio, Bologna (IT)
(72) Inventor: Beghelli, Gian Pietro, 40050 Monteveglio, Bologna (IT)
(74) Representative: Zanardo, Giovanni

(57) **Abstract**

An electronic control system for operating emergency lamps (L) comprising environmental lamps of a fluorescent or incandescent type, an electrical accumulator battery (B) to supply emergency lamps (L) and an electronic control circuit (90) to activate the operation of the lamps (L) by using an accumulator battery (B) in cases of an emergency such as a network supply failure.

An appropriate digital computer application program capable of managing the entire system also provides certain instructions to a microprocessor (24) in a logic control section (40), capable of sustaining the operation of the lamp (L) in an emergency situation, until fully operating conditions for discharge-type lamps are attained after recovering the network power supply.

## Description

This invention refers to an electronic control system for operating emergency lighting lamps.

The processes used for activating emergency lamps, such as in case of network power failures, are presently well known. Diagnostic and self-diagnostic systems are also known for operating emergency lamps by micro-processors capable of running operational tests on peripheral units and operating the connections, as well as methods for centralizing control or procedures capable of remotely activating the functions associated with starting-up, shutting-down and programming the various states of emergency lamps.

All these control operations may be carried out on the entire emergency system, on a certain group of lamps or on each individual lamp, so as to inform on its reliability and predict its efficiency the moment emergency conditions occur.

The results of these tests may be recorded on paper or forwarded through a telephone line, thanks to certain auxiliary devices which can be connected to an electronic processing station.

Under normal system operating conditions, an electronic control station may communicate with any peripheral unit by interrogations performed automatically or periodically, at definite intervals or pursuant to a specific command.

If one or more system devices cannot be reached, this anomaly is reported on the station's monitor by visualizing a message of error.

However, the traditional methods used for verifying the operation of emergency lamps provide for measuring, independently and for each individual lamp, the time elapsed between one functional test and the next, and it is therefore necessary to synchronize the instants of the tests are performed on all the devices included in a system.

Moreover, all the actions for inhibiting or actuating the various devices occur locally at the site of each lighting fixture, so that it also becomes necessary, in addition to a series of actions on the operating tests, to perform an extra round of tests to verify the operating conditions of the emergency lamps themselves. This becomes very impractical and substantially expensive in case of large-size installations.

Moreover, if the emergency lamps are installed at premises fitted with discharge-type lamps (neon tubes or other), as actually happens with most of the ordinary lighting systems of industrial workshops or offices due to the fact that the lamps deactivate automatically when normal operating conditions return, such as if a short-circuit is eliminated or a network power supply flows back into the circuit, a complete lighting condition cannot be guaranteed at the end of the emergency situation, due to the fact that the discharge-type lamps, once they're deactivated based on an electric power failure or other cause, manage to reach their full operating level only after periods approaching 10 minutes.

The end of an emergency condition is therefore immediately followed by a period of "darkness" of the premises, due to a deactivation of the emergency lamps and the fact that the normal lamps connected to the network power supply are barely lit and initially assume a very faint yellow-orange appearance. The lamps in fact require a certain lapse of time, in the order of a few minutes, before reaching a condition of maximum lighting output.

Finally, the complexity of the installation and the considerable number of connecting lines to be hooked up between the power supply network, the station and the peripheral devices turn the production of a traditional circuit, capable of achieving a delayed power supply to the emergency lights, into a quite expensive, complex and time-consuming job.

The scope of this invention is therefore to offer an electronic control system for operating emergency lamps, capable of eliminating the mentioned drawbacks or allowing the uniform and constant lighting of an entire working area in case of an emergency such as a short circuit, a fire, a temporary network power supply failure, etc.

Another scope of this invention is to make it possible to install the mentioned electronic control system in already existing electric systems, without applying any changes to either a new or an existing system. A further scope of this invention is to produce an electronic control system capable of guaranteeing a perfect operation of the emergency lamps as well as a conformity of the operating procedures and design to the existing regulations in the branch.

Not the least scope of the invention is to achieve an electronic control system to verify the operation of emergency lamps capable of being easily and inexpensively produced, without having recourse to complex and costly technologies.

These and other scopes are achieved by an electronic control system for operating emergency lamps according to claim 1, which is being referred to for brevity.

In an advantageous manner, a centralized control station allows monitoring the operation of the emergency lamps by transmitting various digital control codes, each of which is associated with a specific function of the lamps and corresponds to a series of codes identifying various states of the lamps' functional condition, and eventually a pre-adjustable code to recognize their position.

In addition to these means for enabling and disabling the testing function, other means are provided for activating and deactivating the lamps' emergency lighting function.

These means allow preventing the lighting functions from entering an emergency condition, for example if it is necessary to suspend the electric network power supply.

A particular application program governing the entire system also supplies the necessary instructions to a micro-processor, in order to extend the period during which the emergency lamps are active, thus allowing the discharge lamps of a certain environment's ordinary system to attain to attain their fully operating level, after their nominal operating conditions have been reached.

In addition to the savings afforded by the installation of the mentioned electronic system and their manufacturing costs, the prospective solution also allows observing the regulations set up for the centralized control lines designed to enable and disable the emergency function, according to which the lamps must maintain their condition of enabling an emergency function even in the case of a short circuit between the two conductors of a transmission line.

Further scopes and advantages of this invention will become evident from the following description and drawings, supplied for purely exemplifying and non-limiting purposes, in which:

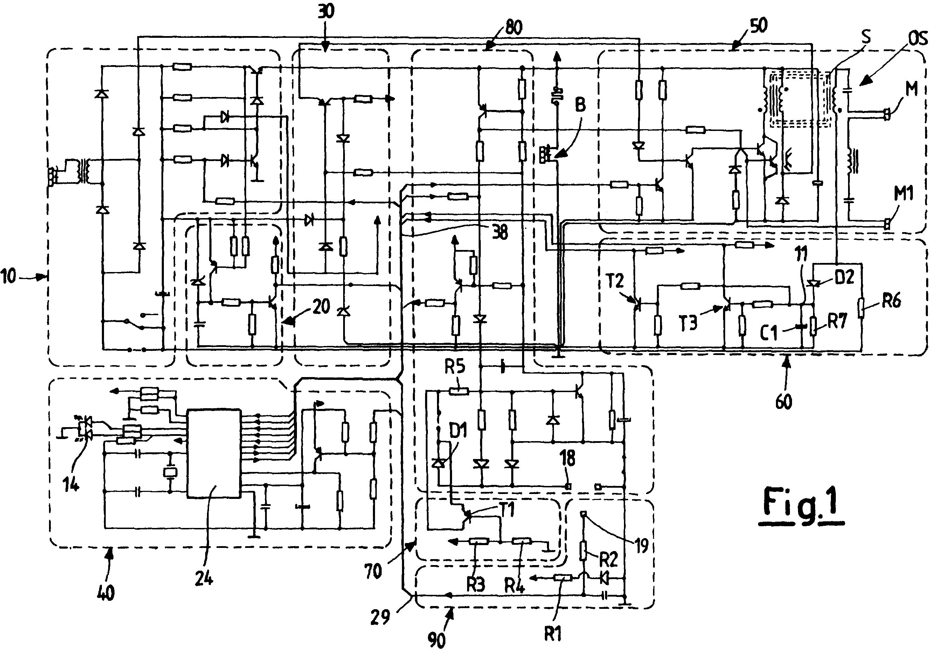

- Figure 1 shows a wiring diagram of an electronic control system for operating emergency lamps, according to this invention;

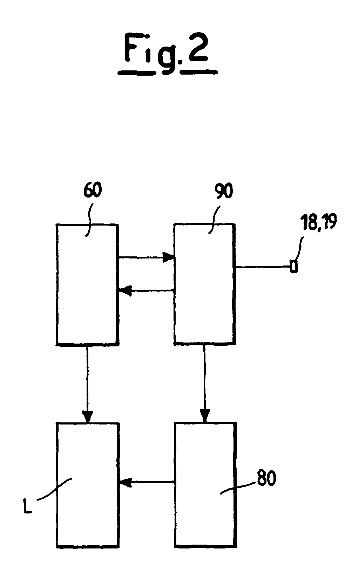

- Figure 2 shows a general block diagram of a control unit associated with the electronic control system for operating emergency lamps, according to this invention;
- Figures 3 through 28 show a plurality of flow charts relating to the software which controls the whole electronic system according to the invention.

With reference to the mentioned figures, an electronic control system for operating emergency lamps includes a basic unit comprising a power supply circuit constituted by a battery charging unit 10, a sensor 20 to indicate the presence of a network supply, a feeding device 30 and a controlling device 80 for a logical control section 40.

The power supply circuit 30 is connected to the electrical power supply network and an accumulator battery B and supplies the start-up energy, through a pilot section 50, to the emergency lamps L.

The number 60 indicates a logic control unit for the functional conditions of the lamps L, while a further enabling and disabling circuit for the emergency functions is constituted by a remote control device and a measuring circuit for the minimum supply voltage included in the device 80.

The number 90 indicates an electronic control circuit for the enabling and disabling conditions of an operating test for the lamps L.

A start-up oscillator, generically indicated by the letters OS, and comprising a transformer device S, is provided between the accumulator battery B and the connecting terminals M, M1 to the emergency lamps L. The secondary circuit of the transformer S is connected to the earth by a "shunt" resistor R6 of the logic control unit 60, which measures the operating conditions of the lamps L.

A peak measuring device is provided in parallel with the resistor R6, which is constituted by a diode D2 connected to a parallel circuit formed by a condenser C1 and a resistor R7.

The outlet 11 of the peak measuring device is simultaneously supplied to the polarizing network of the base of two "PNP" signaling transistors T2, T3, whose collectors are attached to a supply clamp and the inlet 38 of a micro-processor 24 of the logical control section 40, while the emitters are connected to the earth.

The polarizing networks of each base are different for the two transistors T2 and T3.

If the emergency lamp L is missing or disconnected from the terminals M, M1, the current flowing in the resistor R1 is also low, and the voltage drop at its terminals is proportional to the same.

If this voltage is less than a certain minimum value that can be pre-set by appropriately sizing the polarization networks, it will be unable to bring the transistor T1 to a conductive condition.

The high voltage level present on the collector of the transistor T1 is thus supplied to a corresponding inlet of the micro-processor 24, who takes care of emitting a signal, through the LED diodes 14, of a missing or disconnected lamp L.

If the lamp L is of a discharge or fluorescent type and the discharge tube is inactive, the current flowing in the resistor R6 has a high value, and the voltage supplied by the peak measuring device is consequently also at a high value.

If this voltage value exceeds a certain limit that can be pre-set by an appropriate configuration of the polarization network associated with the transistor T2, the latter is brought to a conductive condition and the voltage on its collector will have a low value.

The voltage on the collector of the transistor T2 is supplied to a corresponding inlet of the microprocessor 24 of the control section 40, which even in this case provides for signaling the condition that a tube is inactive.

Under normal operating conditions, the voltage value occurring at the ends of the transistor R6 is intermediate between the minimum and maximum values mentioned above.

The polarizing networks of the two transistors T2 and T3 may be set up in such a manner that in the presence of such an intermediate voltage value the transistor T2 is invested by a low collector voltage, while the transistor T3 has a high voltage on its own collector.

At any rate, the signals supplied to the micro-processor 24 allow the latter to supply a visual and/or acoustic, local or remote signal.

In a preferred embodiment of this invention, the electronic control circuit 90 is set up in such a manner as to allow transmitting the piloting signals from one control station to the logical control units 60 of the emergency lamps L.

In this case, the signals on the operating condition of the emergency lamps L are produced at a local level, on each of the lamps L, by lighted signaling devices 14, for instance LED diodes, capable of assuming different colors or alternative activation modes, depending on the signal's content.

The terminal clamps 18, 19 belong to the measuring device 80 and the electronic control circuit 90, respectively, can be provided, by two separate control lines and simple push-buttons and switches, with logical signals, preferably of a "low" or "high" voltage type essentially constant for a predetermined period of time, so as to control the enabling or disabling condition of an emergency function or the activation or deactivation of the testing procedures for operating the emergency lamps L.

This makes it feasible to activate or deactivate the operating test at a centralized point, in the measuring circuit of the power supply device 30 simultaneously for all the lamps L, so as to make it possible to simply and conveniently synchronize the electronic timing devices used for the counting of the intervals between one text and the next.

In a similar manner, the centralized enabling and disabling control of the emergency function allows the simultaneous programming of the two states for all the supplied lamps L.

The control signals are appropriately memorized in the microprocessor 24 of the control unit 40, which is capable of interpreting the incoming signals by comparing them with the codes previously memorized in its interior, and of activating or deactivating the corresponding functions.

The micro-processor 24 is conveniently programmable, so as to enable it to automatically monitor the transmission of the control signals, especially as relates to the testing functions of the lighting lamps L and the enabling or disabling of the emergency functions.

Moreover, it is possible to transmit the control signals to the emergency lamp L through a single two-conductor transmission line, by short-circuiting the terminal clamps 18, 19 and inserting a de-coupling circuit 70, set up in such a manner as to achieve a condition of high impedance between a resistor R2 of the circuit 90 and the earth, whenever the two conductors of the transmission line are formed by an open circuit.

The de-coupling circuit 70 comprises a "PNP" type transistor T1 inserted between a resistor R5 and a diode D1 of the measuring circuit of the power supply device 30.

The transistor T1 is supplied, by the resistors R1, R2, the terminal clamps 18, 19 and the diode D1, with a voltage value essentially identical to the network supply voltage.

A polarizing network for the bases R3, R4 allows the transistor T1 to be cut-off, due to the fact that the base voltage is higher than the voltage value found on the emitter, thus supplying a high voltage to the outlet 29 of the electronic circuit 90, which is connected to the microprocessor 24 of the logic control section 40. Under emergency conditions, meaning in the absence of a network power supply, the transistor T1 is brought to a conductive condition by an emergency enabling control signal, endowed with a voltage level decidedly lower than the 6 volt nominal value needed for enabling an emergency function.

In a further improvement of the electronic control system, according to the invention, an interface communicating with the programmable micro-processor 24 may allow a bi-directional transmission of data and commands between the lamps L and the micro-processor 24 itself, in which the signaling structures or their interpreting codes and associated functions are programmed.

It is for example possible to provide a low-level positive voltage signal for which no operation is performed, as well as a high level negative signal corresponding to a signal inhibiting the emergency function and a high level positive signal corresponding to an enabling command for the emergency function.

A voltage signal equal to 0 volt may correspond to an inhibiting command of the testing function for operating the lamp, while a voltage signal rapidly changing within a pre-established frequency range and a voltage spread of 0 to 6 volt may correspond to a transmission or reception signal for data and commands to the terminal clamps 18, 19, in accordance with a pre-established codification protocol.

Apart from signaling the operating conditions of the emergency lighting lamps L, the micro-processor 24 may eventually, by diversifying its answer to the controls depending on the lamps' operating condition and the reasons causing their activation, carry out certain functions needed to preserve the various functional units of the lamps L, such as for instance the deactivation of their start-up if the lamp L should happen to be missing or malfunctioning.

According to a preferred and non-limiting embodiment of this invention, the microprocessor 24 is programmed by a special program for electronic computers, which allows reverting to the nominal operating conditions of the lighting lamps installed in work premises, in particular of a discharge type, at certain periods of time delayed with respects to the instant in which the normal power supply conditions from the previously malfunctioning electric network are re-established.

In fact, if the intensity of the network supply current is suddenly decreased for any reason, so as to fall below a certain threshold value which starts up the lighting of the discharge lamps or similar frequently installed at work sites, the mentioned lamps are shutoff and the emergency lamps are automatically switched on by the electric circuit in the manner described above.

However, once the nominal operating conditions of the electric network and the current intensity supplied by the discharge lamps returns to the threshold value needed to start-up the discharge, the emergency lamps are automatically deactivated and the lighting of the site is again and exclusively entrusted to the discharge lamps.

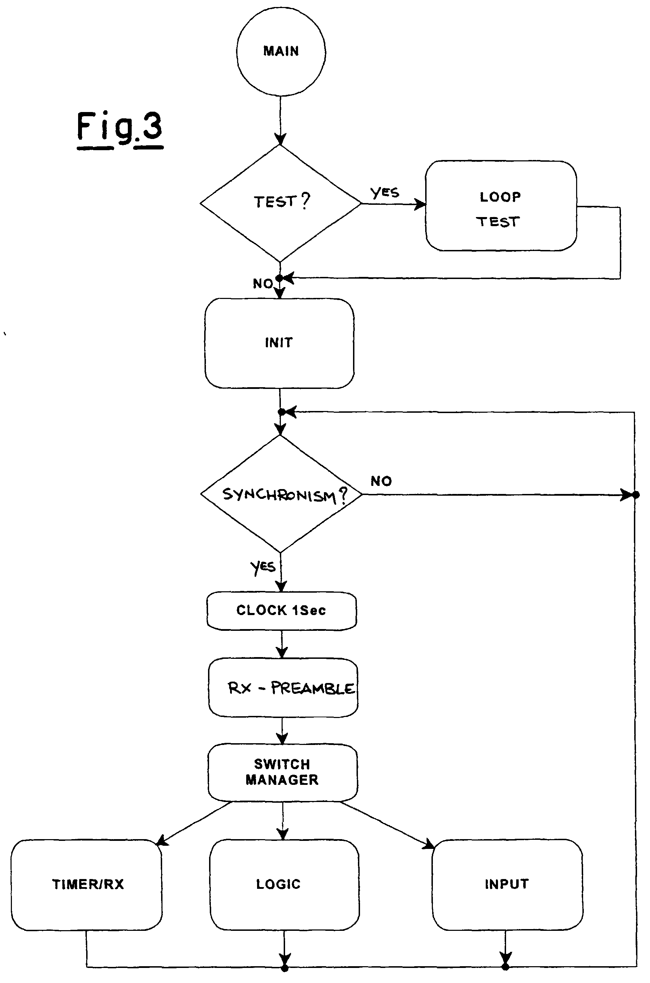

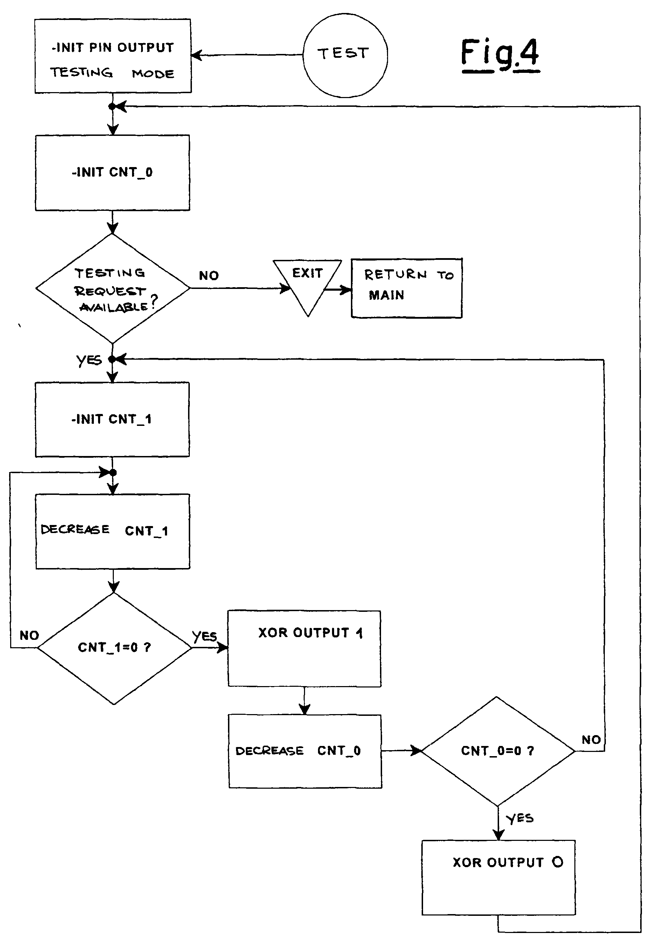

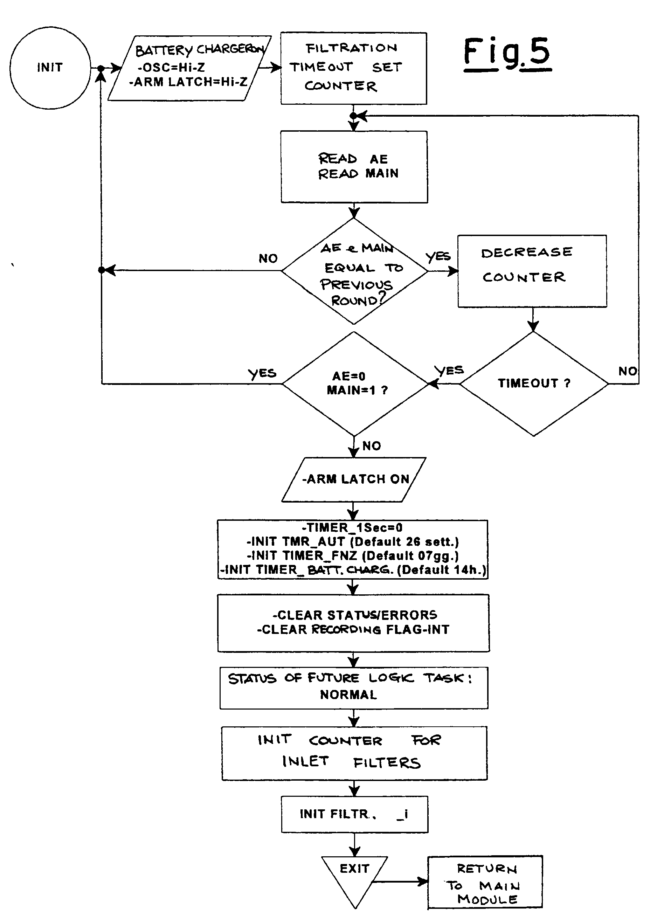

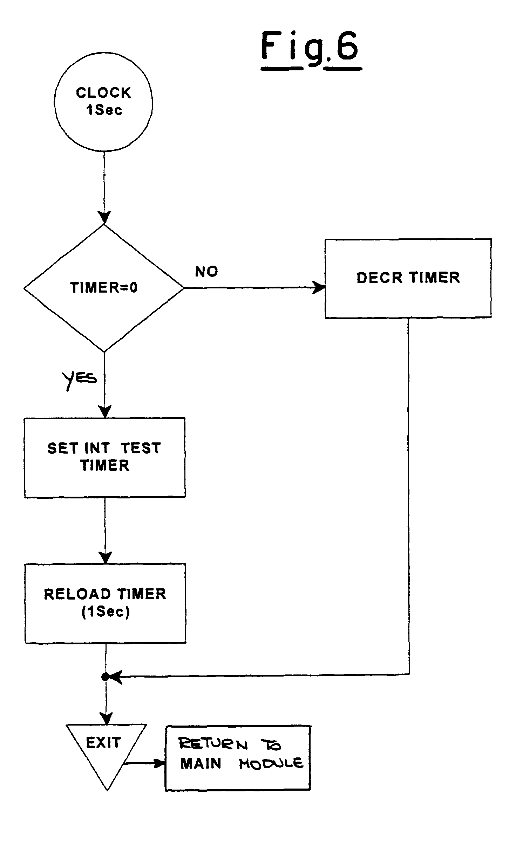

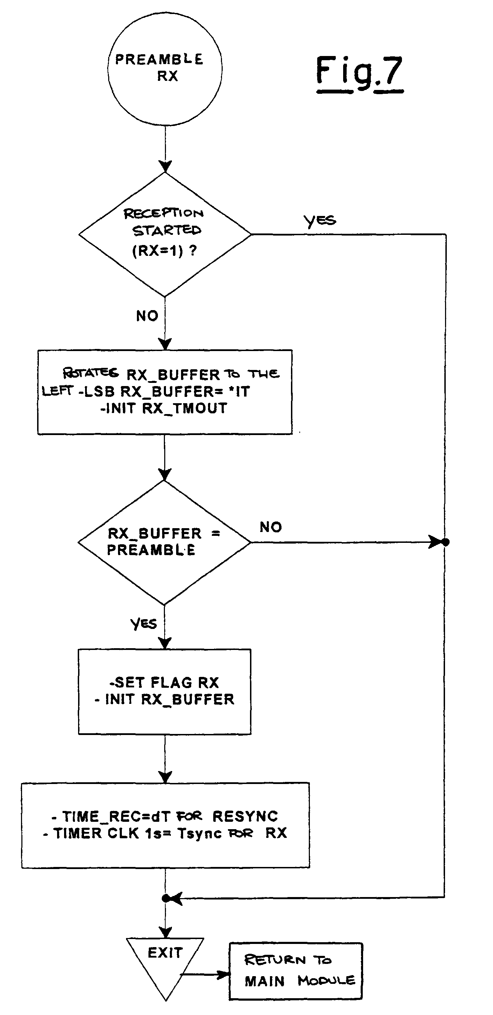

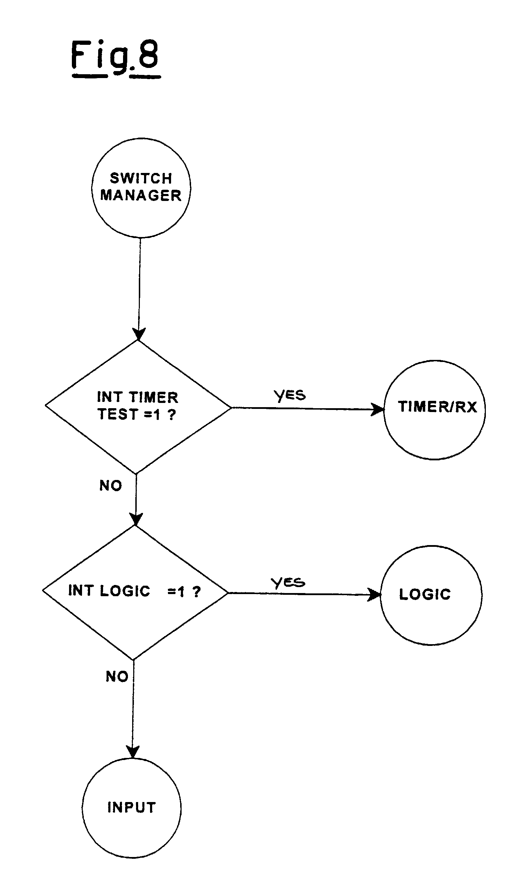

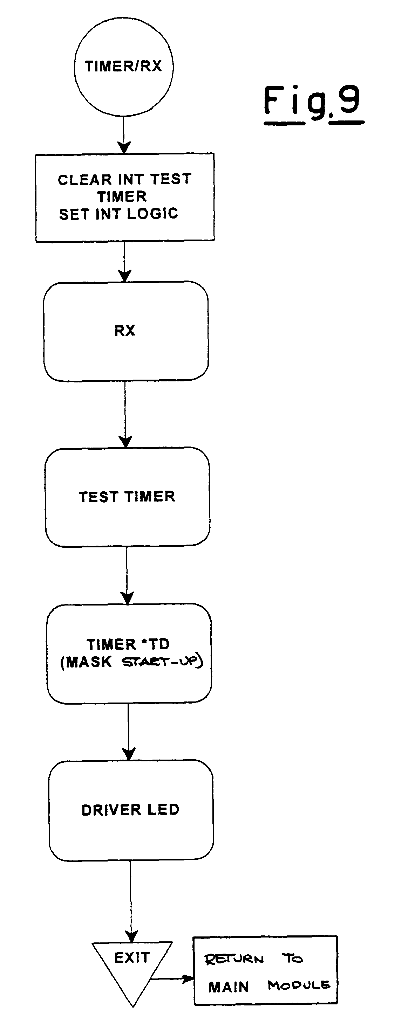

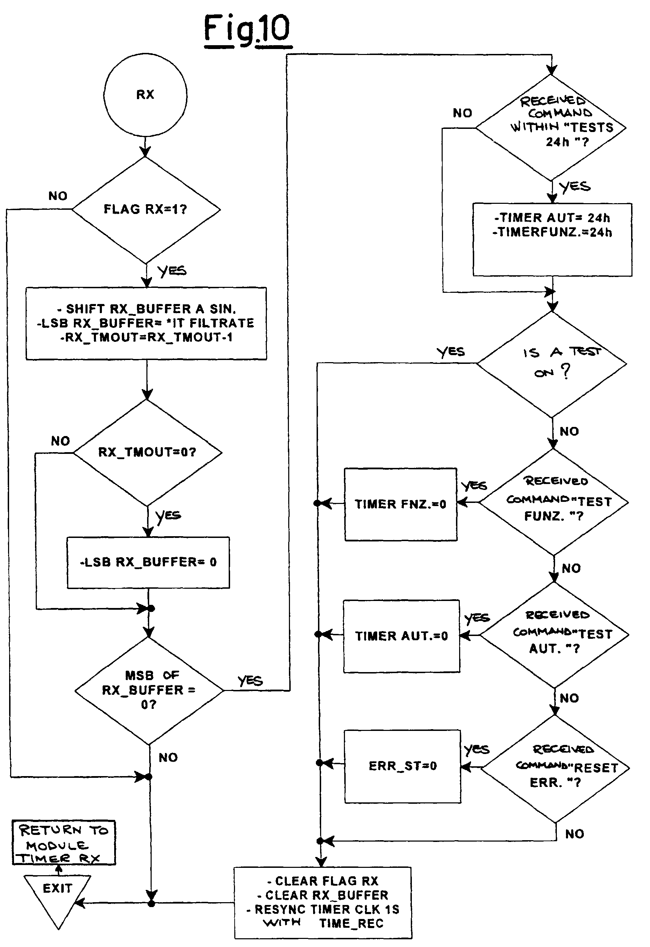

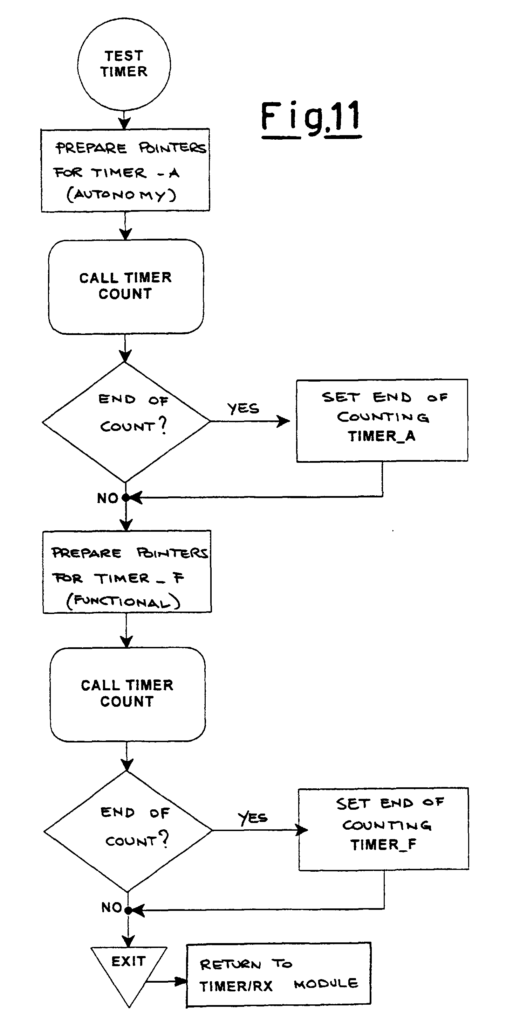

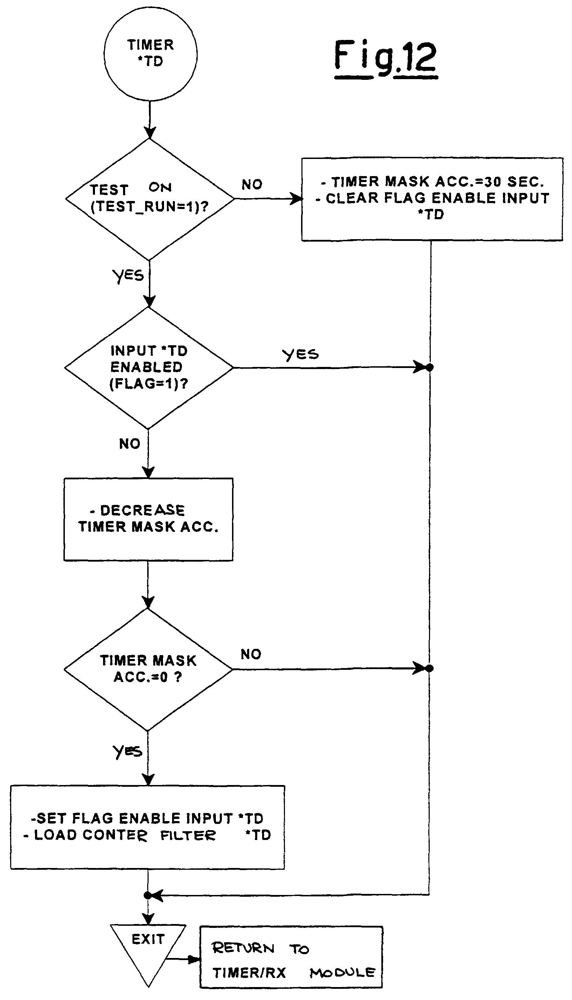

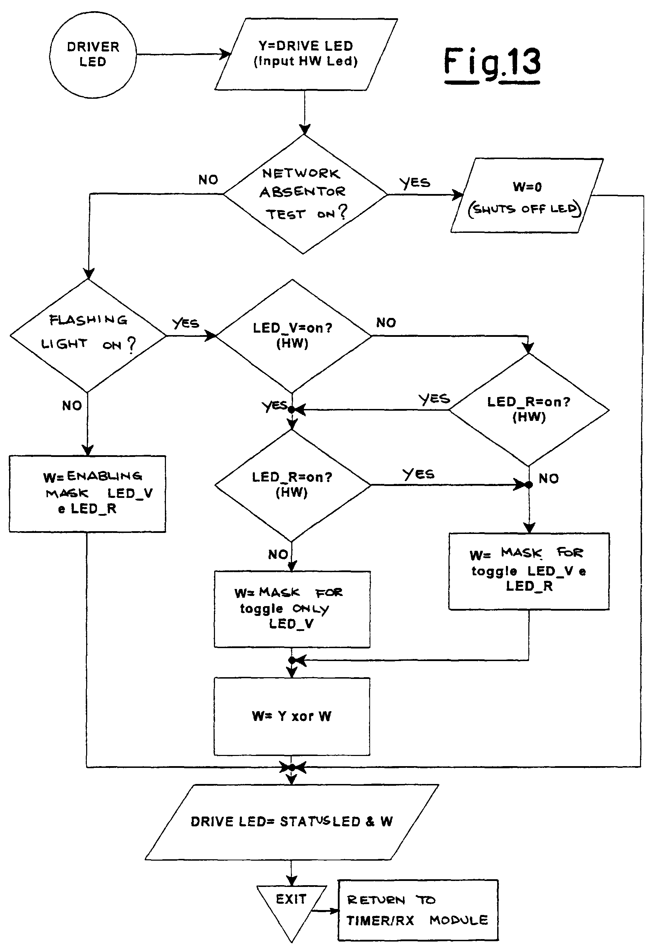

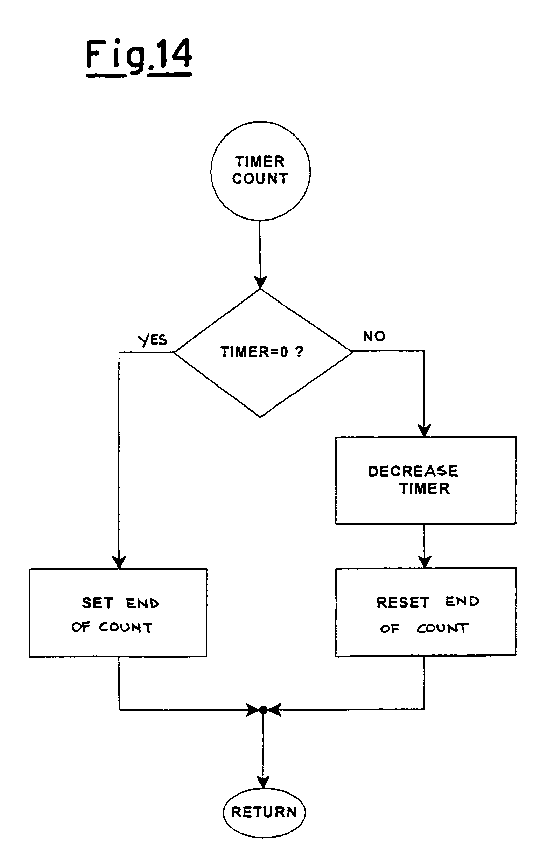

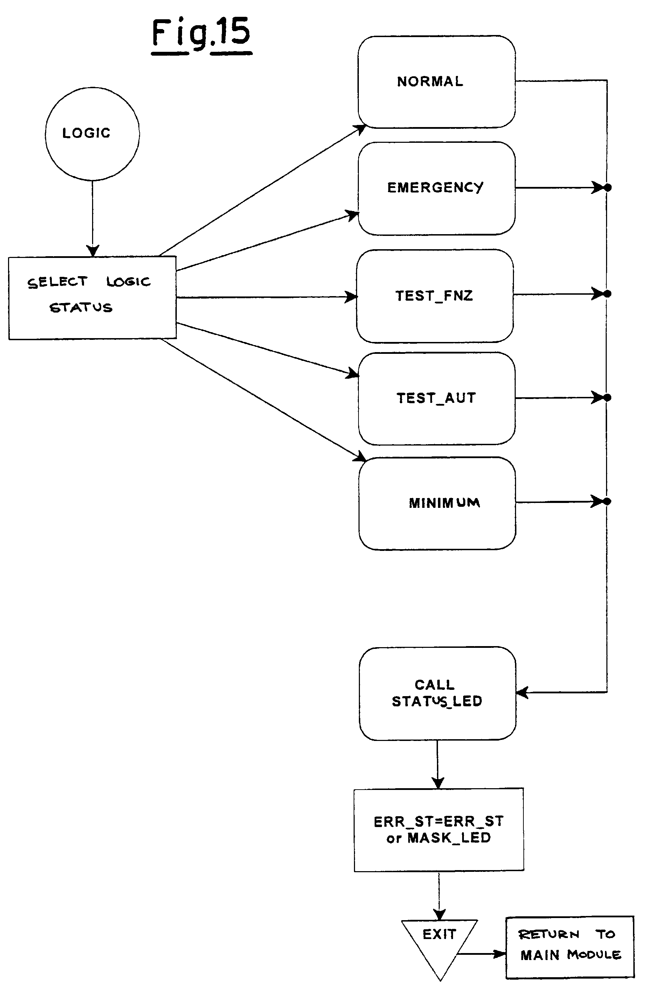

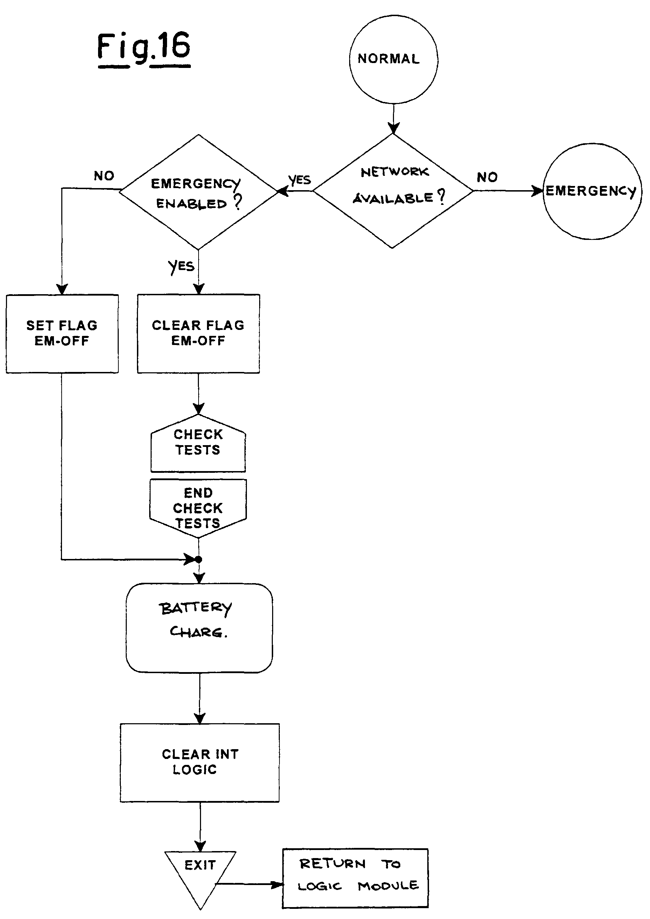

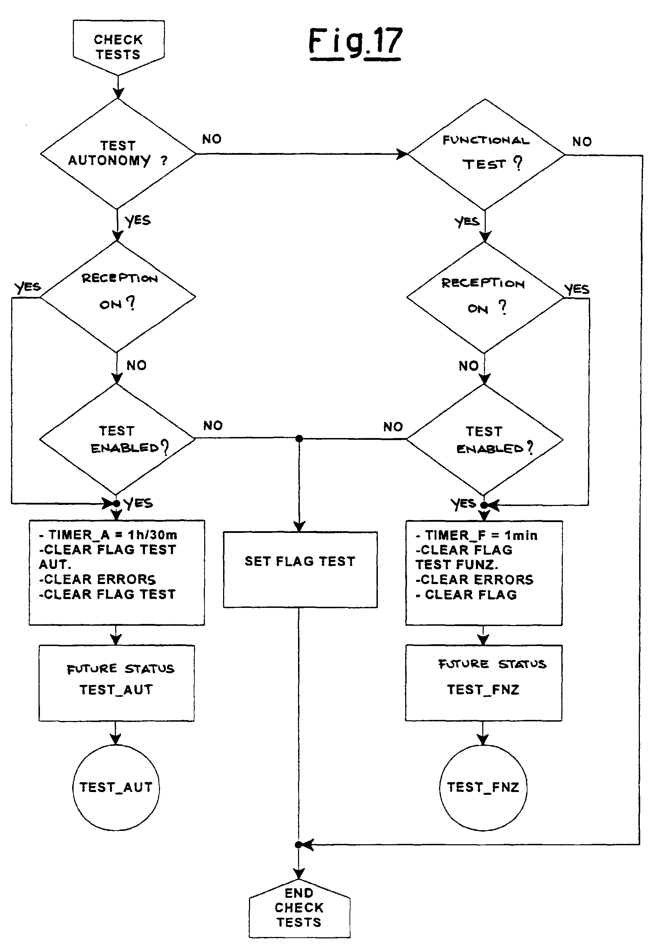

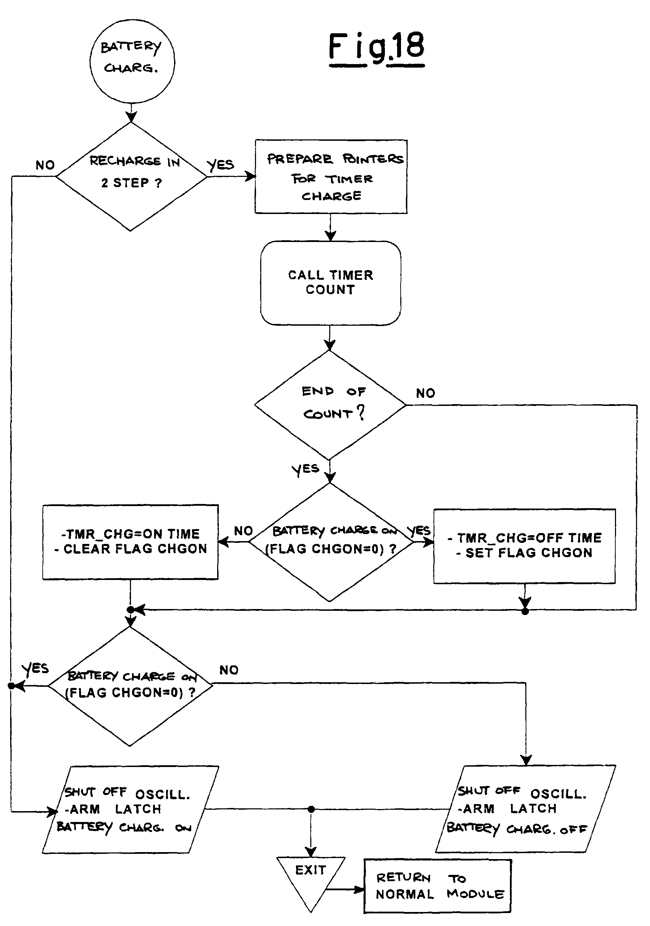

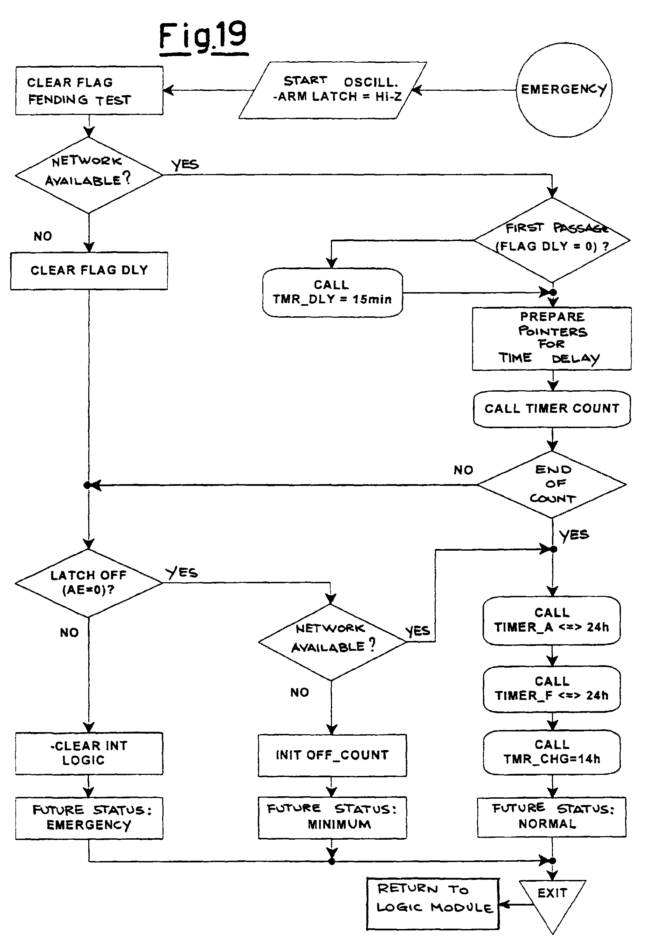

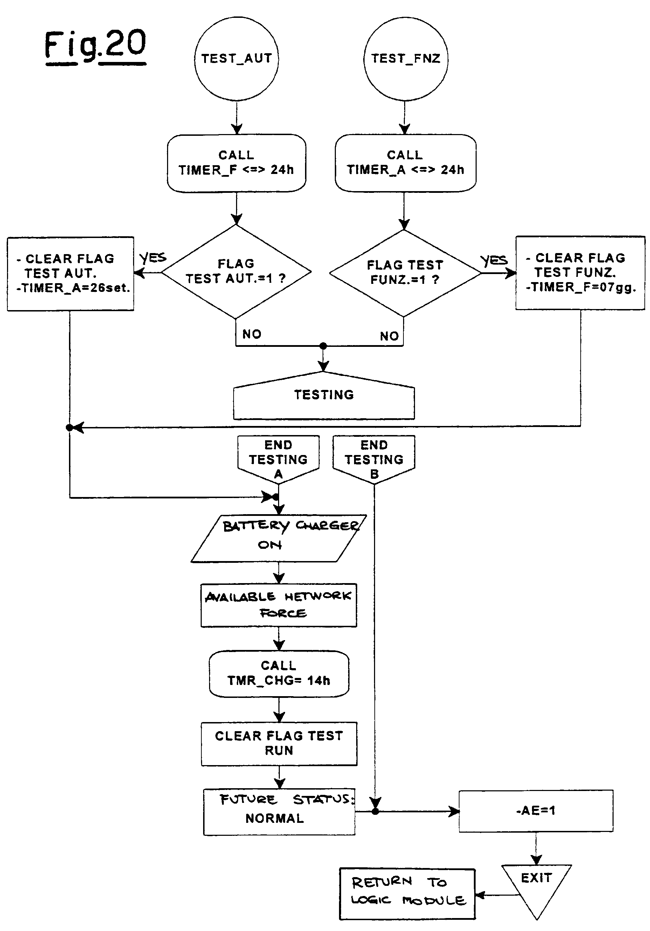

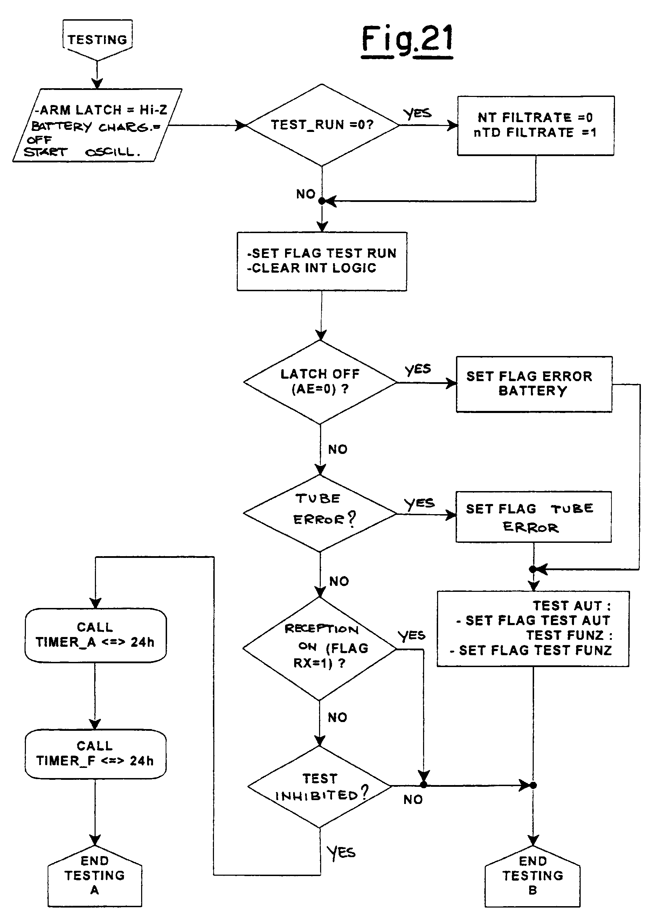

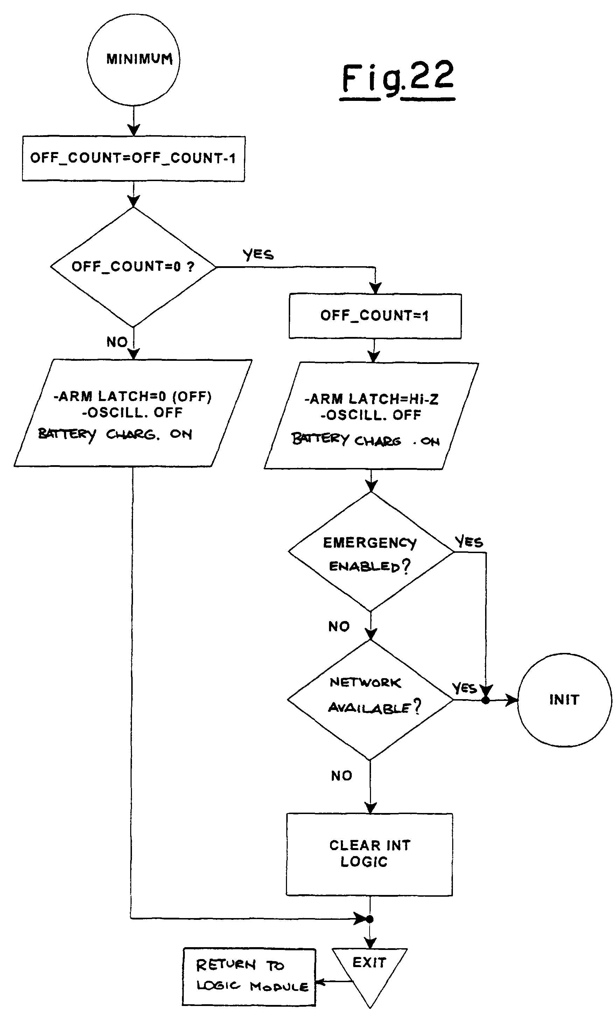

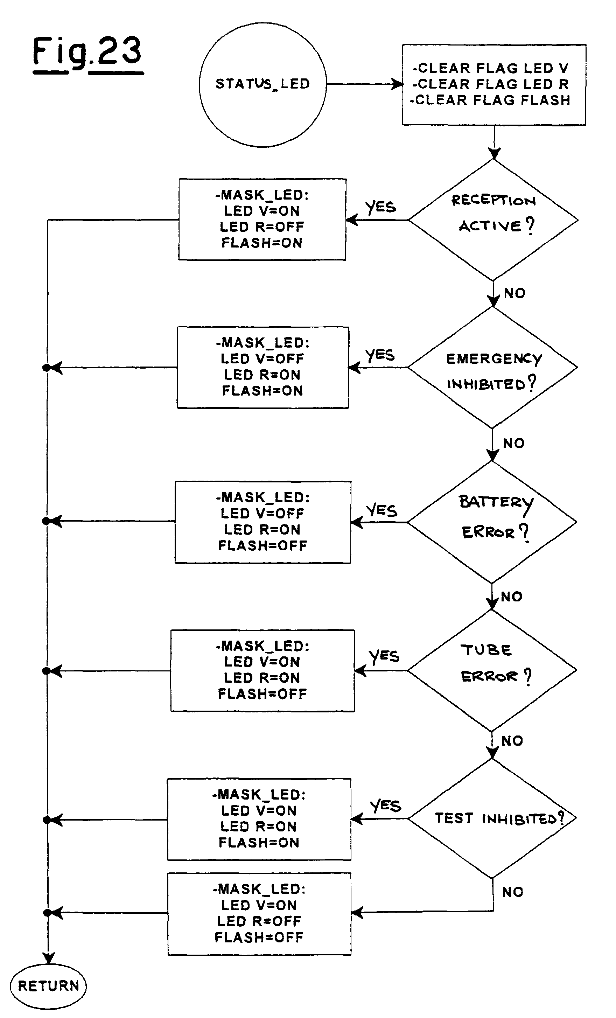

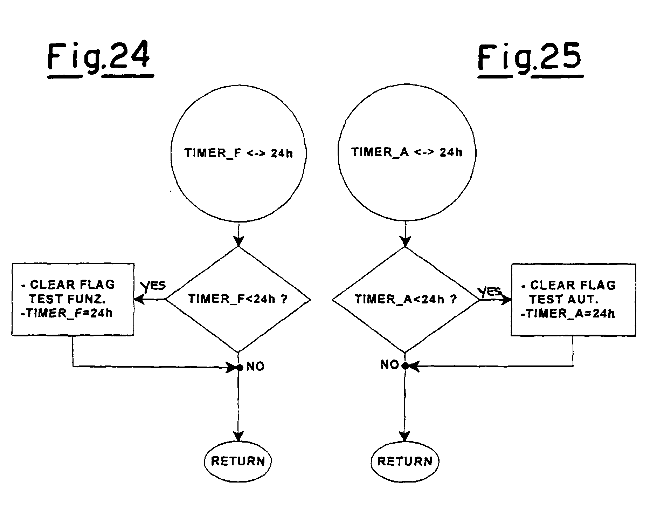

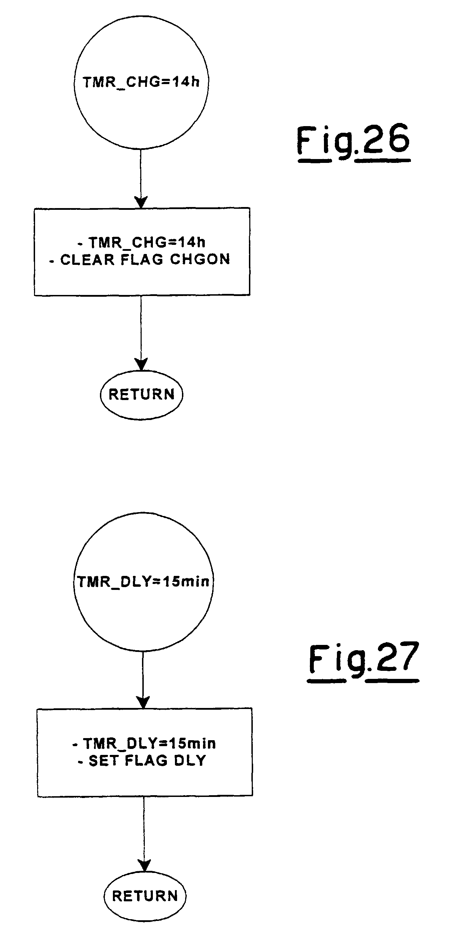

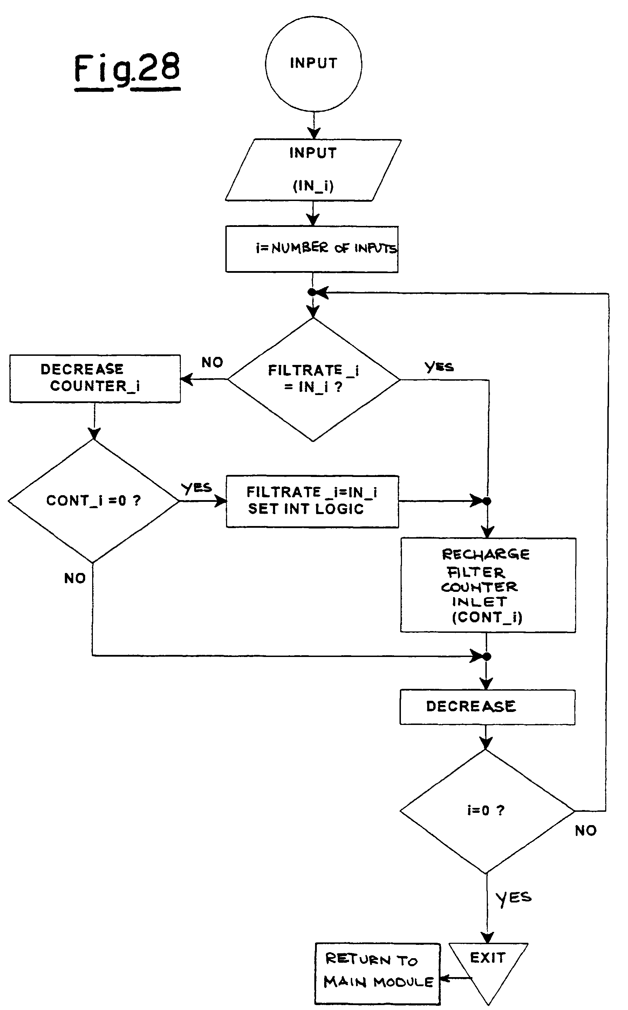

However, because the latter require a considerable starting-up time generally lasting for 10-12 minutes before reverting to a maximum lighting condition, it is necessary to wait for this period of time before achieving a full lighting capacity for the entire site. The application program governing the entire system, described in Figs. 3-28 by a series of flow diagrams eliminates even this drawback.

In particular, a voluntary resetting of the normal operating conditions is not carried out at the instant of actual return to an emergency condition, but after a time lapse of 15 minutes, so as to allow the emergency lamps to continue operating and to give the discharge lamps, which are designed to provide an ambient lighting under normal operating conditions, a chance to properly cool down and to attain their fully operating condition within the expected time. The application program for electronic computers listed above provides, in one of its exemplifying and non-limiting embodiments, for a 1-minute functional test run every 28 days, and an autonomy test for the accumulator battery used to supply current to the emergency lamps, run every 26 weeks and lasting from 1 to 3 hours.

The application program also provides for the possibility of programming the charging of the battery itself in a buffer mode, meaning in sequential steps or charging impulses for a pre-established period of time. The above description clearly outlines the characteristics of the electronic control system for operating emergency lamps as an object of this invention, and clearly describes the resulting advantages.

In particular, these are represented by:
- Flexibility, simplicity and quick installation and wiring of the electrical and electronic devices pertaining to the system,
- Versatile usage of the system on existing plants, without modifying the plant itself,
- Easy integration with other electrical systems, and reliability from the viewpoint of a simplicity of usage and type of intervention,
- Time savings when installing the system, with respect to the known technology,
- Observance of the existing national and international regulations referring to electrical safety,
- Limited cost with respect to the known technology.

It is evident that numerous other variants may be applied to the electronic control system for operating the emergency lamps as an object of this invention, without however abandoning the principles of novelty inherent in the inventive concept. It is likewise evident that in the practical implementation of the invention the materials, shapes and sizes of the illustrated details may be of any kind depending on the requirements, and that the same may be substituted by others of an equivalent type.

## Claims

1. An electronic control system for operating emergency lamps (L), of a type comprising at least one environmental lighting device, at least one lamp (L) capable of operating under emergency conditions, power supply (30) and control devices (80) for said emergency lamps (L), capable of being independently activated by any other electrical power supply source of said lighting devices, an accumulator battery (B) for the energy to be supplied to said lamp (L) under emergency conditions, and a circuit (10) for the recharging of said battery (B), where said controlling devices (80) are associated with certain logical control devices (40) capable of being activated based on the said lighting devices' operating conditions, and with a logical control unit (60), electronic control units (90) for activating or deactivating said logic devices (40) and piloting devices (50) of said emergency lamps (L), characterized in that said logical control devices (40) comprise at least one micro-processing device (24) connected to said piloting devices (50) and said electronic control devices (90), which commands the activation and deactivation of a testing procedure for operating said emergency lamp (L), depending on the signals present on at least one of its inlets (29, 38) and allows the switching on and off of said lamp depending on at least one electrical parameter of said power supply source for the environmental lighting devices.

2. An electronic control system according to claim 1, characterized in that said environmental lighting devices are constituted by discharge lamps, where said micro-processing device (24) is programmed, by an appropriate computer processing program, so as to allow the said lighting devices to return to their normal operating conditions, within some pre-established time intervals delayed with respect to an instant in time at which the normal power supply conditions of said electric source are re-established at the end of an emergency situation.

3. An electronic control system according to claim 2, characterized in that said application program performs a voluntary resetting of normal operating conditions after a time interval of 15 minutes from the actual end of said emergency situation, so that said emergency lamps (L) continue to operate during said time interval.

4. An electronic control system according to claim 2, characterized in that said application program provides for an operating test of said emergency lamp (L) and an autonomy test of said accumulator battery (B).

5. An electronic control system according to claim 1, characterized in that said electronic control devices (90) for said micro-processor's (24) activating or deactivating conditions are of a type capable of emitting at least two command signals for an operating test of said emergency lamp (L), where said electrical command signals exhibit a multiple number of voltages constant for at least one pre-established minimum time period.

6. An electronic control system according to the claims 1 and 5, characterized in that said electronic command devices (90) are of a type capable of transmitting signals varying in time, in particular square waves at a pre-established frequency, while each type of signal is associated with a certain command for said emergency lamp (L), where said logical command devices (40) comprise some means for receiving and reading said signals transmitted by said electronic command devices (90) and at least one system for memorizing the signals and command interpretation codes associated with them.

7. An electronic control system according to at least one of the foregoing claims, characterized in that said logical command devices (40) are of a type capable of transmitting answering signals corresponding to codes identifying the operating conditions of said emergency lamps (L).

8. An electronic control system according to claim 7, characterized in that said logical command devices (40) also comprise certain devices for the codifying of a pre-settable identification code of said emergency lamp (L) and/or its position within the mentioned environment.

9. An electronic control system according to claim 1, characterized in that said micro-processor (24) receives at its inlet (29, 38) a command signal and activates or deactivates an operating test for said emergency lamp (L) depending on the level of said command signal, and provides for a de-coupling circuit (70) connected to said micro-processor (24) which comprises certain electrical devices capable of determining a condition of high impedance on at least one first inlet terminal clamp (18, 19) of said power supply devices (30) and/or of said electronic command devices (90), so as to transmit some command signals to said emergency lamp (L) by a single two-conductor transmission line.

10. An electronic control system according to claim 1, characterized in that said power supply (30) and control devices (80) comprise at least one diode (D1) connected to a resistor (R5).

11. An electrical control system according to claims 1 and 9, characterized in that said electronic command circuit (90) comprises at least one pair of resistors (R1, R2) interposed in series between a second terminal clamp connected to a power supply voltage and a second terminal clamp connected to a reference voltage, while said first inlet terminal clamps (18, 19) are short-circuited.

12. An electrical control system according to claims 1 and 10, characterized in that said de-coupling devices (70) comprise at least one transistor device (T1) of a PNP type, interposed between a resistor (R5) and said diode (D1) of said power supply (30) and control devices (80), where said transistor device (T1) is equipped with a polarizing network (R3, R4).

13. An electrical control system according to claim 1, characterized in that it provides for a programmable communications interface with said micro-processor (24), so as to allow a bi-directional transmission of data and commands between said emergency lamps (L) and said micro-processor (24), while certain signaling and/or interpreting codes and/or associated functions are programmed inside said micro-processor (24).

14. An electrical control system according to claim 1, characterized in that said logic control unit (60) and said electronic control circuit (90) of the activating and deactivating conditions of said emergency lamps (L) are interconnected in such a manner as to provide for a bi-directional transmission of data and commands, and provide for the emission of variable square-wave signals capable of assuming a multiple number of voltages which are constant over a predetermined period of time.

15. An electrical control system according to claim 1, characterized in that said emergency lamps (L) are of a discharge or fluorescence type, that said logical control devices (60) comprise means for reading (R6, R7, D2, C1) the current supplied and absorbed by said lamps (L) and their threshold current reference values, comparable wth the current values measured for acquiring the various operating states of said emergency lamps (L).

16. An electrical control system according to claims 1 or 15, characterized in that said current supplied and absorbed by said lamps (L) is provided by the secondary circuit of a transformer (S) being part of an oscillator (OS) of said piloting devices (50) of the lamps (L).

17. An electrical control system according to claims 1 or 15, characterized in that said means of reading (R6, R7, D2, C1) comprise a peak measuring circuit, whose outlet is simultaneously supplied to the base of two signaling transistor devices (T1, T2) marked by clearly different base polarizations and sized so as to be capable of signaling a condition of interrupted current, deactivation or normal operation of said emergency lamps (L).

18. An electrical control system according to claims 1 and 15, characterized in that said means of reading (R6, R7, D2, C1) of the operating conditions of said emergency lamps (L) transmit signals about said operating conditions to said logical command devices (40), which provide for visualizing the measured operating conditions at a local or centralized level, by appropriate visualizing devices (14).
